# FASCICULE DE BREVET EUROPEEN

(11) **EP 1 849 118 B1**
(45) Date de publication et mention de la délivrance du brevet: **07.11.2018**
(21) Numéro de dépôt: 06709444.1
(22) Date de dépôt: 26.01.2006
(51) Int. Cl.: G06F 21/62

(54) **SYSTÈME ET PROCÉDÉ D'ANONYMISATION DE DONNÉES PERSONNELLES SENSIBLES ET PROCÉDÉ D'OBTENTION DE TELLES DONNÉES**
SYSTEM UND VERFAHREN ZUR ANONYMISIERUNG VON VERTRAULICHEN PERSÖNLICHEN DATEN UND VERFAHREN ZUM ERHALTEN SOLCHER DATEN
SYSTEM AND METHOD FOR THE ANONYMISATION OF SENSITIVE PERSONAL DATA AND METHOD OF OBTAINING SUCH DATA

(30) Priorité: 26.01.2005 FR 0500784
(43) Date de publication de la demande: 31.10.2007
(73) Titulaire: Orange, 75015 Paris (FR)
(72) Inventeur: CANARD, Sébastien, F-14000 Caen (FR); GUILLOTEAU, Stéphane, F-14430 Douville En Auge (FR); BOUDET, François, F-14190 Fierville Bray (FR)
(74) Mandataire: Fontenelle, Sandrine
(86) Numéro de dépôt international: PCT/FR2006/050060
(87) Numéro de publication internationale: WO 2006/079752

(56) Documents cités:
- EP-A- 0 884 670
- EP-A- 1 099 996
- WO-A-01/18631
- WO-A-01/69514
- FR-A- 2 837 301
- US-A- 5 606 610
- US-A- 5 778 071
- US-A1- 2003 208 457

## Description

### Arrière-plan de l'invention

La présente invention se rapporte au domaine général de l'anonymisation des données.

L'invention peut être utilisée, préférentiellement, mais de façon non limitative, dans le domaine de la santé, pour l'anonymisation des données médicales d'un patient.

Dans ce domaine, les assureurs complémentaires souhaitent, depuis plusieurs années, accéder aux données de santé contenues dans les feuilles de soins électroniques que seuls reçoivent aujourd'hui les assureurs obligatoires.

On comprendra aisément que ce sujet touche des points sensibles comme le respect des libertés individuelles et la préservation du secret médical.

Depuis plusieurs années, les cartes à microcircuits (cartes à puce) sont utilisées dans le domaine de la santé.

En France, par exemple, le professionnel de santé (médecin, pharmacien,...) utilise une carte à microcircuit professionnelle qui possède des fonctions d'identification, de signature et de chiffrement permettant le transfert des feuilles de soins électroniques.

La carte SESAME VITALE des assurés n'est à ce jour utilisée que pour l'identification des assurés chez les professionnels de santé et le stockage de leurs droits. Elle est bien acceptée par les assurés car elle accélère la procédure de remboursement.

Mais la carte SESAME VITALE ne permet pas aux assureurs complémentaires de procéder au traitement électronique des données médicales détaillées, par exemple pour réaliser des analyses statistiques sur l'ensemble de la population assurée.

Le document EP 1 099 996 décrit un système pour gérer, de façon anonyme, les données médicales sensibles de patients.

Ce système comporte un premier sous-système qui associe, pour chaque patient, les données d'identification de ce patient avec un identifiant (scrambled id) généré à partir de ses données d'identification.

Le système selon EP 1 099 996 comporte également une base de données qui mémorise, pour chaque patient, les données médicales sensibles de ce patient en association avec son identifiant, ces données étant reçues en provenance de fournisseurs de données.

Ce système présente un inconvénient majeur du fait que le même identifiant est partagé par les fournisseurs de données, le premier sous-système et la base de données.

En conséquence, le système selon EP 1 099 996 n'est pas à strictement parler un système anonyme, le premier sous-système ayant la possibilité, s'il parvenait (licitement ou frauduleusement) à accéder à ladite base de données, d'obtenir toutes les données médicales sensibles d'un patient identifié.

WO0118631 décrit un procédé destiné à identifier la source ou l'origine de données dans des bases de données contenant des données rendues anonymes. Ce procédé représente un moyen particulièrement utile de donner à un patient, ou à son prestataire médical, accès aux données de ce patient sur un réseau où sont stockées ces données, dans des fichiers de données rendues anonymes.

### Objet et résumé de l'invention

L'invention vise à répondre à la demande des assureurs complémentaires pour leur permettre de gérer les données détaillées de prestations médicales tout en respectant les règles strictes en matière de protection de la vie privée et du secret médical. Le principe retenu est l'anonymisation des données médicales des patients, c'est-à-dire la transmission des données détaillées à partir du professionnel de santé vers un tiers sous une forme non nominative. Ce principe est recommandé dans le rapport Babusiaux http://www.sante.gouv.fr/htm/actu/babusiau/sommaire.htm.

Ainsi, et selon un premier aspect, l'invention concerne un système de gestion de données personnelles sensibles comportant :
- un premier sous-système informatique comportant :
   - des moyens de génération d'une clef commune à partir de données d'identification d'une personne ;
   - une base de données privée qui associe la clef commune aux données d'identification; et
- un deuxième sous-système informatique comportant :
   - des moyens d'obtention de la clef commune ;
   - des moyens de génération d'un nombre aléatoire à partir de la clef commune ;
   - des moyens de réception d'un message d'enregistrement comportant au moins une donnée sensible de cette personne et le nombre aléatoire ; et
   - des moyens pour mémoriser, dans une deuxième base de données, la donnée personnelle en association avec le nombre aléatoire et la clef commune.

Ce système de gestion permet de respecter strictement la contrainte d'anonymisation. En effet, le premier sous-système, qui possède l'identité réelle de la personne sous la forme de données d'identification mais pas le nombre aléatoire associé à cette personne, ne mémorise pas les données personnelles sensibles de cette personne.

Et le deuxième sous-système, qui lui mémorise les données sensibles de cette personne, ne peut relier ces données sensibles à une personne, car il ne mémorise pas l'identité réelle de cette personne, mais seulement la clef commune partagée avec le premier sous-système.

En conséquence, même si le premier sous-système obtenait, par accident ou malhonnêteté, le message d'enregistrement destiné au deuxième sous-système, il serait dans l'incapacité d'identifier le patient à qui appartiennent les données sensibles contenues dans ce message, du fait que le premier sous-système ne connaît que la clef commune et pas le nombre aléatoire.

Dans un mode particulier de réalisation de l'invention, le nombre aléatoire est utilisé, comme décrit ultérieurement, pour permettre à une personne possédant un support numérique personnel (par exemple une carte à micro-circuits) sur lequel est mémorisé ce nombre aléatoire, de s'authentifier auprès du deuxième sous-système.

Dans le domaine de la santé, le premier sous-système peut être mis en oeuvre par une assurance complémentaire ou une mutuelle de santé. Elle gère les contrats des personnes, ainsi que le paiement des prestations médicales mais, d'après la loi actuelle, elle ne peut connaître les données détaillées des prestations qu'elles ont reçues.

Le deuxième sous-système, qui agit comme un prestataire du premier sous-système, peut effectuer des traitements statistiques sur les données détaillées. Mais il n'est pas capable de relier ces données à une personne.

Comme nous le verrons par la suite, à part le patient et le professionnel de santé, nul ne doit être capable de connaître les données détaillées d'un patient particulier, c'est-à-dire à la fois son identité et les prestations qu'il a reçues de la part du professionnel de santé.

Dans un mode préféré de réalisation, le deuxième sous-système du système de gestion selon l'invention comporte :
- des moyens pour obtenir au moins une donnée réduite à partir d'une donnée sensible ; et
- des moyens pour envoyer, au premier sous-système informatique, un message comportant la donnée réduite et la clef commune associées à la donnée personnelle sensible dans la deuxième base de données.

Dans cette variante de réalisation, on considérera qu'une donnée détaillée sensible comporte ou est associée à une donnée réduite unique qui, elle, n'est pas sensible.

Elle peut donc être mémorisée dans la base de données privées du premier sous-système.

Dans le domaine de la santé, les termes de "donnée détaillée" et de "donnée réduite" sont parfaitement connus.

Les données réduites peuvent notamment être utilisées par le premier sous-système qui gère les contrats des patients. Les données détaillées peuvent être associées à des données complémentaires comportant par exemple le montant d'une prestation médicale.

Pour renforcer la sécurité des transactions, le système de gestion de données personnelles selon l'invention comporte, dans un mode de réalisation particulier, des moyens de création d'une paire de clef privée/publique de signature, la clef publique de signature, incluse dans un certificat, étant mémorisée dans le deuxième sous-système, et la clef privée de signature étant mémorisée dans le support numérique du patient.

Préférentiellement, le deuxième sous-système comporte des moyens de création d'une paire de clefs privée/publique de chiffrement. Ainsi, lorsque des données personnelles sensibles d'un patient doivent être transmises au deuxième sous-système, ces données sont tout d'abord chiffrées par le support numérique de cette personne, grâce à la clef publique de chiffrement.

Les données chiffrées sont alors reçues par le deuxième sous-système en provenance d'un lecteur de ce support. Sur réception de ces données, le deuxième sous-système déchiffre ces données chiffrées avec la clef privée de chiffrement précédemment mémorisée afin d'obtenir le nombre aléatoire et les données personnelles sensibles de cette personne. Il mémorise alors, dans sa deuxième base de données, ces données personnelles en association avec le nombre aléatoire.

Dans un mode préféré de réalisation dans lequel le support numérique personnel du patient est une carte à microcircuit, la création de la paire clefs privée/publique de signature, et d'un certificat lié à la clef publique et à la clef commune précitées est réalisée par un encarteur.

En variante, la création de cette paire de clefs est réalisée par le support numérique lui-même, qui envoie la clef publique au deuxième sous-système pour création du certificat. Cette méthode renforce encore la sécurité puisque la clef privée ne sort jamais de ce support.

Quoi qu'il en soit, le certificat, la clef privée et le nombre aléatoire sont inscrits dans une zone protégée de ce support.

De façon connue, ce support numérique comporte un algorithme de signature ainsi qu'un algorithme de chiffrement, préférentiellement asymétriques. Il comporte le cas échéant un générateur de nombres pseudo-aléatoires.

Dans un mode préféré de réalisation, le système de gestion de données sensibles selon l'invention peut aussi être utilisé pour lever l'anonymat d'une donnée personnelle sensible particulière, sur requête de la personne concernée.

A cet effet, le premier sous-système comporte des moyens pour recevoir une requête d'obtention d'une donnée personnelle sensible particulière d'une personne.

Bien entendu, il ne faut pas que le premier sous-système puisse obtenir du deuxième sous-système d'autres données personnelles sensibles de cette personne.

En conséquence, l'invention prévoit que le premier sous-système envoie au deuxième sous-système une requête d'authentification de la personne concernée, cette requête comportant un identifiant de la donnée personnelle sensible particulière recherchée et la clef commune générée à partir des données d'identification de cette personne.

Dans le cadre d'un système de santé, l'identifiant peut être un numéro de facture lié à une prestation particulière.

Le deuxième sous-système comporte des moyens de réception de la requête d'authentification, des moyens d'authentification de la personne, et des moyens pour envoyer la donnée personnelle sensible particulière recherchée au premier sous-système en cas de succès de l'authentification.

Cette caractéristique particulière peut être utilisée, par exemple en cas de réclamation d'une personne.

La procédure d'authentification à proprement parler de la personne par le deuxième sous-système ne fait pas partie de l'invention, et ne sera pas détaillée ici.

Lorsque le système de gestion est utilisé dans le domaine de la santé, les données personnelles sensibles des patients sont reçues par le deuxième sous-système en provenance du lecteur du support numérique du patient, installé physiquement chez le professionnel de santé.

Ces données sensibles comportent en particulier le montant de la prestation concernée.

Dans cette variante, préférentiellement, le deuxième sous-système comporte des moyens pour calculer un montant de remboursement à partir du montant de la prestation et des droits du patient mémorisés dans la deuxième base de données.

Ce deuxième sous-système comporte des moyens pour envoyer ce montant de remboursement à destination du lecteur (à l'attention du professionnel de santé) ou à destination du premier sous-système informatique.

Corrélativement, l'invention vise également un procédé de gestion de données personnelles sensibles tel que revendiqué dans les revendications 9 à 13.

Les avantages particuliers du procédé de gestion selon l'invention sont identiques à ceux du système de gestion de données personnelles mentionnés ci-dessus et ne seront pas rappelés ici.

Selon une implémentation préférée, les différentes étapes du procédé de gestion sont déterminées par des instructions de programmes d'ordinateurs.

En conséquence, l'invention vise aussi un programme d'ordinateur sur un support d'informations tel que revendiqué dans la revendication 14.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations tel que revendiqué dans la revendication 15.

Ce support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, ce support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau, et notamment sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente de façon schématique un système de gestion de données personnelles selon l'invention dans un mode préféré de réalisation ;
- la figure 2 représente, sous forme d'organigramme, les principales étapes d'un procédé de gestion de données personnelles sensibles selon l'invention dans un mode préféré de réalisation ; et
- la figure 3 représente, sous forme d'organigramme, les principales étapes d'un procédé d'obtention de données personnelles sensibles selon l'invention dans un mode préféré de réalisation.

### Description détaillée d'un mode de réalisation

La description qui va suivre sera faite dans le contexte de l'anonymisation de données personnelles dans le domaine de la santé.

Dans cet exemple de réalisation, chaque patient assuré possède un support numérique personnel constitué par une carte à microcircuit 10. En variante, ce support numérique peut être constitué par une clef USB, un téléphone mobile, ou tout autre équipement électronique comportant un espace de stockage sécurisé, et des moyens cryptographiques d'authentification, de signature et de chiffrement.

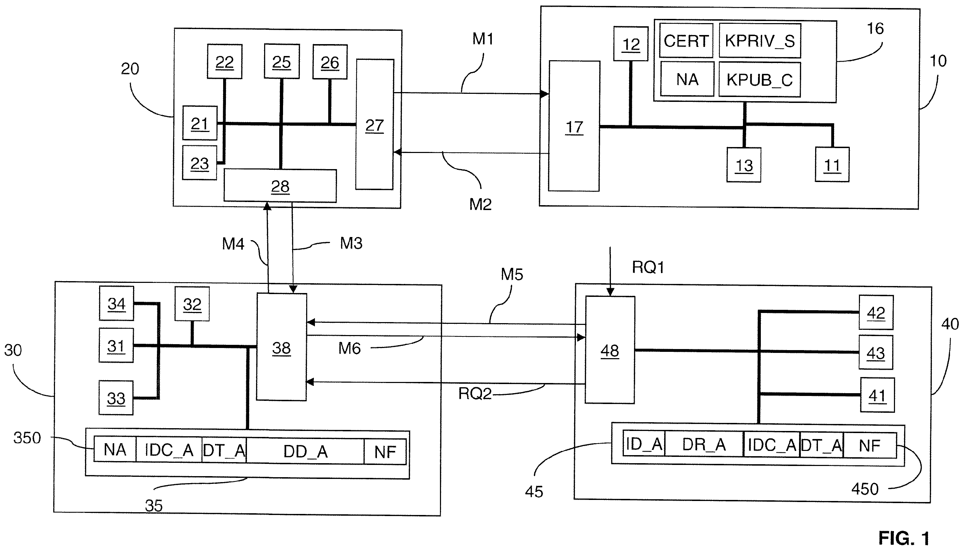

Dans le système de la **figure 1**, on a représenté une carte à microcircuit 10 appartenant à un assuré A, un lecteur 20 appartenant à un professionnel de santé et adapté à lire cette carte à microcircuit, un deuxième sous-système 30 adapté à recevoir, de façon chiffrée, les données personnelles médicales sensibles de l'assuré A en provenance du lecteur 20, et à mémoriser ces données de façon anonyme, et un premier sous-système 40 qui contient les données personnelles des assurés et qui peut être utilisé pour obtenir une donnée détaillée particulière sur requête de l'assuré.

Dans ce mode de réalisation, on considérera que pour toute prestation médicale, un professionnel de santé génère, pour un patient A, des données personnelles sensibles constituées par des données médicales détaillées DD_A personnelles et des données complémentaires comportant un montant MP de la prestation.

Ces données médicales détaillées DD_A sont associées à des données médicales réduites DR_A.

Les données médicales réduites DR_A peuvent par exemple constituer un sous ensemble des données médicales détaillées DD_A. Dans une variante, le deuxième sous-système comporte une table de correspondance lui permettant de retrouver les données réduites DR_A à partir de données détaillées DD_A.

Les données réduites d'une prestation sont par exemple constituées par le nom d'un groupe de médicaments, et les données détaillées par le nom de ce groupe (donnée réduite), des informations sensibles et personnelles (nom du médicament dans le groupe).

Chaque patient A est identifié par des données d'identification ID_A personnelles, constituées par exemple par son nom, son adresse et son numéro de sécurité sociale.

Ces données d'identification ID_A sont mémorisées dans une base de données privée 45 du premier sous-système 40.

Ce premier sous-système 40 comporte un processeur 41, une mémoire morte 42 qui comporte des programmes d'ordinateur pouvant être exécutés par le processeur 41, et une mémoire vive 43 nécessaire à l'exécution de ces programmes.

La mémoire morte 42 comporte en particulier un programme de génération d'une clef IDC_A à partir des données d'identification ID_A d'une personne A.

Cette clé étant partagée par le deuxième sous-système 30, nous la baptisons "clef commune IDC_A".

Pour chaque abonné A au système de gestion selon l'invention, la base de données 45 du premier sous-système 40 comporte un enregistrement 450 qui associe à des données d'identification ID_A de cette personne, la clef commune IDC_A générée.

Le deuxième sous-système 30 comporte également un processeur 31, une mémoire morte 32 comprenant des programmes d'ordinateur pouvant être exécutés par le processeur 31 et une mémoire vive 33 nécessaire à l'exécution de ces programmes.

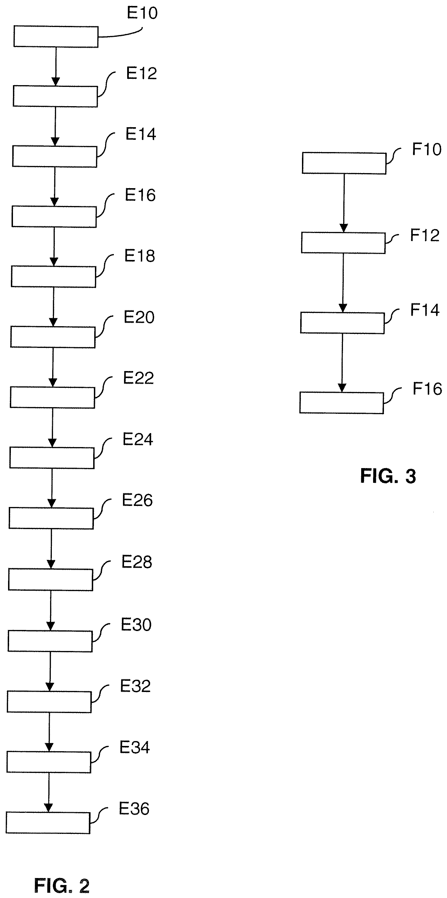

La mémoire morte 32 comporte en particulier un programme d'ordinateur adapté à mettre en oeuvre le procédé de gestion de données personnelles dont l'organigramme est représenté à la **figure 2****.**

Ce procédé comporte une première étape E10 au cours de laquelle le deuxième sous-système 30 obtient, pour une personne A dont il ne connaît pas l'identité, la clef commune IDC_A générée par le premier sous-système 40.

Dans le mode préféré de réalisation décrit ici, on considère que chaque assuré A possède des droits DT_A particuliers négociés avec son assureur, ces droits DT_A étant mémorisés dans l'enregistrement 450 de la base de données privée 45 du premier sous-système 1. On considérera également que ces droits DT_A sont obtenus par le deuxième sous-système 30 au cours de l'étape E10 d'obtention précitée.

Dans le mode préféré de réalisation décrit ici, l'étape E10 du procédé de gestion de données est suivie par une étape E12 au cours de laquelle le deuxième sous-système 30 génère un nombre aléatoire NA à partir de la clef commune IDC_A reçue à l'étape précédente.

Dans un mode préféré de réalisation, la clé commune IDC_A et le nombre aléatoire NA sont générés en utilisant un schéma de chiffrement symétrique de type AES. Plus précisément, le programme de génération de la clé commune IDC_A du premier sous-système 40 garde secrète une clef AES K1 et le programme de génération d'un nombre aléatoire du deuxième sous-système 30 garde secrète une clef AES K2, les identifiants étant calculés comme suit :
- IDC_A = AES_{K1} (ID_A) ; et
- NA = AES_{K2} (IDC_A).

Cette étape E12 est suivie par une étape E14 au cours de laquelle le nombre aléatoire NA, la clef commune IDC_A et les droits DT_A d'une personne dont le deuxième sous-système 30 ne connaît pas l'identité, sont mémorisés dans un enregistrement 350 d'une base de données 35 du deuxième sous-système 30.

Comme nous le verrons ultérieurement, cet enregistrement 350 possède un champ, pour l'instant libre, dans lequel le deuxième sous-système 30 enregistrera les données personnelles sensibles DD_A de cette personne.

Ces données sensibles DD_A sont donc anonymes, au sens où le deuxième sous-système 30 ne connaît pas les données d'identification ID_A de cette personne.

Dans le mode préféré de réalisation décrit ici, le premier sous-système 40 et le deuxième sous-système 30 comportent respectivement des moyens de communication 38 et 48 permettant de relier ces sous-système via un réseau, par exemple le réseau Internet. Ces moyens de communication sont constitués par des cartes réseau et des couches logicielles connues de l'homme du métier.

Ces moyens de communication peuvent en particulier être utilisés pour permettre au deuxième sous-système 30 d'obtenir la clef commune IDC_A en provenance du premier sous-système 40.

Nous supposerons maintenant que le nombre aléatoire NA généré par le deuxième sous-système 30, la clef commune IDC_A générée par le premier sous-système 40 et les données d'identification ID_A de la personne A sont envoyés à un encarteur pour la création d'une carte à microcircuit 10 personnelle de la personne A.

Dans le mode de réalisation décrit ici, sur réception de ces informations, l'encarteur crée, au cours d'une étape E16 du procédé de gestion de données selon l'invention, une paire de clefs privée/publique de signature KPRIV_S/KPUB_S et un certificat CERT englobant la clef publique de signature KPUB_S et l'identifiant IDC_A.

De façon connue de l'homme du métier, à l'aide de la clef commune d'identification IDC_A et du certificat CERT, l'encarteur est capable de retrouver toutes les données d'une personne A, et notamment ses données personnelles ID_A, le nombre aléatoire NA et la clef privée de signature KPRIV_S.

Dans ce mode préféré de réalisation, le deuxième sous-système crée une paire de clefs privée/publique de chiffrement KPRIV_C/KPUB_C. Au cours de cette même étape, la clé privée de chiffrement KPRIV_C est mémorisée dans une zone mémoire 34 du deuxième sous-système 30. La clef publique de chiffrement KPUB_C est fournie à l'encarteur.

Le certificat CERT, la clef privée de signature KPRIV_S associée à ce certificat, le nombre aléatoire NA et la clef publique de chiffrement KPUB_C sont mémorisés dans une zone protégée 16 de la carte à microcircuit 10.

La carte à microcircuit 10 comporte un processeur 11, une mémoire morte 12 comportant des programmes pouvant être exécutés par le processeur 11 et une mémoire vive 13 nécessaire à l'exécution de ces programmes.

Nous allons maintenant décrire une prestation médicale. On supposera que la personne A se rend chez un professionnel de santé équipé d'un lecteur 20 adapté à lire la carte à microcircuit 10 de cette personne.

Ce lecteur 20 comporte un processeur 21, une mémoire morte 22 comportant des programmes pouvant être exécutés par le processeur 21 et une mémoire vive 23 nécessaire à l'exécution de ces programmes.

Le lecteur 20 comporte également des moyens 27 de communication adaptés à communiquer avec des moyens 17 de communication de la carte à microcircuit 10 en lecture et en écriture.

Le lecteur 20 de carte à microcircuit comporte également des moyens de communication 28 avec les moyens de communication 38 du deuxième sous-système 30.

Dans le mode préféré de réalisation décrit ici, nous supposerons que les moyens de communication 28 du lecteur 20, les moyens de communication 38 du deuxième sous-système 30 et les moyens de communication 48 du premier sous-système 40 permettent à ces trois équipements de communiquer via un réseau (par exemple Internet) non représenté sur la figure 1.

Nous supposerons que la prestation de santé décrite ici donne lieu à la génération de données médicales détaillées DD_A auxquelles correspondent des données réduites DR_A. Le montant de la prestation médicale est noté MP.

Dans le mode préféré de réalisation décrit ici, le lecteur 20 comporte un clavier 25 permettant la saisie des données détaillées DD_A et un écran 26 pour le contrôle de cette saisie.

Lorsque les données médicales détaillées DD_A sont saisies par le professionnel de santé, ces données et le montant MP de la prestation sont envoyés dans un message M1 à la carte à microcircuit 10 du patient A.

Toutes ces données sont reçues par les moyens de communication 17 de la carte à microcircuit 10. Le processeur 11 de cette carte met alors en oeuvre un programme de signature et de chiffrement mémorisé dans la mémoire morte 12.

Plus précisément, dans l'exemple décrit ici, ces programmes de chiffrement et de signature utilisent l'algorithme RSA-PKCS de la façon suivante.

Tout d'abord, ce programme génère une signature S des données détaillées personnelles DD_A et des données complémentaires comportant le montant MP en utilisant la clef privée de signature KPRIV_S et le certificat CERT.

Cette signature S comporte les données détaillées personnelles DD_A du patient et le montant MP de la prestation.

Puis le programme chiffre, en utilisant la clef publique de chiffrement KPUB_C, la signature S, le nombre aléatoire NA et le certificat CERT. Il obtient ainsi des données chiffrées DC.

Ces données chiffrées DC sont lues par le lecteur 20 (flux M2 sur la figure 1) puis envoyées, dans un message d'enregistrement M3, au deuxième sous-système 30.

Ces données chiffrées DC sont reçues par les moyens de communication 38 du deuxième sous-système 30 au cours d'une étape E18 du procédé de gestion de données selon l'invention.

Cette étape E18 est suivie par une étape E20 au cours de laquelle le processeur 31 du deuxième sous-système 30 met en oeuvre un programme mémorisé dans la mémoire morte 32 pour déchiffrer ces données DC.

Pour réaliser ce déchiffrement, le programme précité utilise la clef privée de déchiffrement KPRIV_C mémorisée dans la mémoire 34 au cours de l'étape E16 décrite ci-dessus.

Cette étape E20 de déchiffrement permet au deuxième sous-système 30 de récupérer le nombre aléatoire NA ayant servi au chiffrement, les données détaillées DD_A de la prestation incluses dans la signature S, et des données complémentaires, par exemple le montant de la prestation MP.

Au cours de cette étape E20, le deuxième sous-système 30 vérifie la signature S en utilisant la clef publique de signature KPUB_S.

Cette étape de déchiffrement E20 est suivie par une étape E22 au cours de laquelle le deuxième sous-système 30 mémorise, dans la base de données 35, les données personnelles médicales DD_A dans le champ resté libre de l'enregistrement 350 comportant le nombre aléatoire NA compris dans les données chiffrées DC.

Dans le mode préféré de réalisation décrit ici, cette étape E22 de mémorisation est suivie par une étape E24 au cours de laquelle le deuxième sous-système 30 met en oeuvre un programme mémorisé dans sa mémoire 32 pour obtenir les données réduites DR_A à savoir ici le nom d'un groupe de médicaments à partir des données détaillées DD_A. D'autre part il génère un numéro de facture NF.

Cette étape E24 est suivie par une étape E26 au cours de laquelle le deuxième sous-système 30 envoie, au premier sous-système 40, un message M6 comportant les données réduites DR_A, le numéro de facture NF, éventuellement des données complémentaires comme le montant MP de la prestation, et la clef commune IDC_A mémorisée dans l'enregistrement 350 précité.

Ainsi, sur réception de ce message M6, le premier sous-système 40 peut mémoriser dans la base de données 45 les données réduites DR_A dans l'enregistrement comportant la clef commune IDC_A.

Le numéro de facture NF est mémorisé dans un champ de l'enregistrement 450 de la base de données 45 du sous-système 1.

Le principe d'anonymisation est respecté puisque les données détaillées DD_A ne sont connues que du deuxième sous-système 30, celui-ci n'ayant pas accès aux données d'identification ID_A mémorisées dans la base de données privée 45 du premier sous-système 40.

Dans un mode préféré de réalisation, la mémoire morte 32 du deuxième sous-système 30 comporte un programme permettant de faire un traitement statistique sur les données sensibles DD_A mémorisées dans la deuxième base de données 35.

Dans le mode préféré décrit ici, l'étape E26 d'envoi du message M6 est suivie par une étape E28 au cours de laquelle le deuxième sous-système 30 calcule, à partir des droits DT_A mémorisés dans la base de données 35 dans l'enregistrement comportant la clef commune IDC_A, et du montant de la prestation MP reçu dans les données chiffrées DC, un montant de remboursement MR.

Ce montant de remboursement MR est envoyé, au cours d'une étape suivante E30, au lecteur 20 du professionnel de santé et au premier sous-système 40 par le réseau.

Le numéro de facture NF, le montant de remboursement MR et des informations relatives à la prestation sont fournies au patient par le premier sous-système 40, par courrier par exemple.

A la réception de ce montant de remboursement, le professionnel de santé sait quelle est la somme qui reste à être acquittée par le patient A.

Nous allons maintenant supposer que le patient A souhaite effectuer une réclamation sur la facture portant le numéro NF.

Pour cela, il souhaite obtenir les données détaillées DD_A relatives à cette facture mémorisée dans la base de données 35 du deuxième sous-système 30.

Afin de permettre une telle obtention, le premier sous-système 40 comporte, dans sa mémoire morte 42, un programme informatique qui met en oeuvre un procédé d'obtention de données personnelles conforme à l'invention. Les principales étapes de ce procédé vont maintenant être décrites en référence à la **figure 3****.**

Ce procédé d'obtention comporte une première étape F10 au cours de laquelle le premier sous-système 40 reçoit une requête RQ1 du patient A pour obtenir les données personnelles sensibles DD_A associées à la facture NF.

Cette étape F10 est suivie par une étape F12 au cours de laquelle le premier sous-système 40 obtient, à partir de la base de données 45, la clef commune IDC_A générée à partir des données d'identification ID_A de cette personne A.

Cette étape F12 est suivie par une étape F14 au cours de laquelle le premier sous-système 40 envoie au deuxième sous-système 30 une requête RQ2 pour authentifier la personne A.

Cette requête d'authentification RQ2 comporte l'identifiant NF de la facture et la clef commune IDC_A obtenue à l'étape précédente.

Dans le mode préféré de réalisation décrit ici, cette requête RQ2 est reçue au cours d'une étape E32 du procédé de gestion de données.

L'homme du métier comprendra que de façon préférée, la réception et la gestion de cette requête RQ2 sont effectuées dans un processus différent du processus d'enregistrement des données proprement dit.

Quoi qu'il en soit, cette étape E32 de réception de la requête RQ2 est suivie par une étape E34 au cours de laquelle le deuxième sous-système 30 cherche à authentifier la personne A.

Différentes méthodes d'authentification peuvent être mises en oeuvre, la seule contrainte résidant dans le fait que l'authentification proprement dite doit effectivement être réalisée par le deuxième sous-système 30 afin d'éviter que le premier sous-système 40 puisse se servir de la requête d'obtention RQ1 pour obtenir d'autres données que celles associées à la facture NF.

Si l'authentification réussit, l'étape E34 est suivie par une étape E36 au cours de laquelle le deuxième sous-système 30 envoie les données détaillées DD_A associées au numéro de facture NF dans la base de données 35 au premier sous-système 40.

Ces données détaillées sont reçues au cours d'une étape F16 du procédé d'obtention conforme à l'invention.

Ces données détaillées peuvent ensuite être transmises à l'assuré A pour vérification.

## Revendications

1. Système de gestion de données personnelles sensibles (DD_A) comportant:
- un premier sous-système informatique (40) comportant:
- des moyens (41, 42, 43) de génération d'une clef commune (IDC_A) à partir de données d'identification (ID_A) d'une personne (A) ;
- une base de données privée (45) qui associe ladite clef commune (IDC_A) auxdites données d'identification (ID_A) ; et
- un deuxième sous-système informatique (30) comportant:
- des moyens (38) d'obtention de ladite clef commune (IDCA) ;
- des moyens de génération d'un nombre aléatoire (NA) à partir de ladite clef commune (IDC_A) ;
- des moyens (38) de réception d'un message d'enregistrement (M3) comportant au moins une donnée personnelle sensible (DD_A) de ladite personne (A) et ledit nombre aléatoire (NA) ; et
- des moyens (31, 32, 33) pour mémoriser dans une deuxième base de données (35), ladite donnée personnelle sensible (DD_A) en association avec ledit nombre aléatoire (NA) et ladite clef commune (IDC_A).

2. Système de gestion selon la revendication 1, **caractérisé en ce que** le deuxième sous-système informatique (30) comporte:
- des moyens (31, 32, 33) pour obtenir au moins une donnée réduite (DR_A) à partir d'une donnée sensible (DD_A) ; et
- des moyens pour envoyer, audit premier sous-système informatique (40), un message (M6) comportant ladite donnée réduite (DR_A) et la clef commune (IDC_A) associées à ladite donnée personnelle sensible (DD_A) dans la deuxième base de données (35).

3. Système de gestion selon la revendication 1 ou 2, **caractérisé en ce que** le deuxième sous-système informatique (30) comporte des moyens (31, 32, 33) de traitement statistique desdites données sensibles (DD_A) mémorisées dans la deuxième base de données (35).

4. Système de gestion selon l'une quelconque des revendications 1 à 3, **caractérisé en ce que** le deuxième sous-système informatique (30) comporte des moyens de création d'une paire de clef privée/publique de chiffrement (KPRIV_C, KPUB_C) ; système de gestion dans lequel ladite personne (A) utilise un support numérique personnel (10) pour calculer des données chiffrées (DC) à partir de ladite donnée personnelle sensible (DD_A), dudit nombre aléatoire (NA) et de ladite clef publique de chiffrement (KPUB_C), lesdites données chiffrées (DC) étant adaptées à être envoyées audit deuxième sous-système informatique (30) via un lecteur (20) de ce support (10) ;
- ledit deuxième sous- système informatique (30) comportant:
- des moyens (38) de réception desdites données chiffrées (DC) en provenance dudit lecteur (20) ;
- des moyens (31, 32, 33) pour déchiffrer, avec ladite clef privée de chiffrement (KPRIV_C), lesdites données chiffrées (DC), et obtenir ledit nombre aléatoire (NA) et ladite donnée personnelle (DD_A) en vue de leur mémorisation dans ladite deuxième base de données (35).

5. Système de gestion selon la revendication 4, **caractérisé en ce que** ledit support (10) est adapté à obtenir lesdites données sensibles (DD_A) en provenance dudit lecteur (20).

6. Système de gestion selon l'une quelconque des revendications 1 à 5, **caractérisé en ce que**:
- ledit premier sous-système informatique (40) comporte:
- des moyens (48) de réception d'une requête (RQ1) pour obtenir une donnée personnelle sensible particulière (DD_A1) d'une personne (A) ; et
- des moyens (48) pour envoyer, au deuxième sous-système informatique (30) une requête (RQ2) d'authentification de ladite personne (A), ladite requête d'authentification (RQ2) comportant un identifiant (NF) de ladite donnée personnelle sensible particulière (DD_A1) et la clef commune (IDC_A) générée à partir des données d'identification (ID_A) de ladite personne (A) ; et **en ce que**
- ledit deuxième sous-système informatique (30) comporte:
- des moyens (38) de réception de ladite requête d'authentification (RQ2) ;
- des moyens (31, 32, 33) d'authentification de ladite personne (A) ; et
- des moyens (38) pour envoyer ladite donnée personnelle sensible particulière (DD_A1) audit premier sous-système informatique (40) en cas de succès de ladite authentification.

7. Système de gestion selon l'une quelconque des revendications 1 à 6, dans lequel lesdites données personnelles sensibles sont constituées par:
- des données médicales détaillées (DD_A) relatives à une prestation médicale effectuée pour un patient (A), ces données médicales détaillées (DD_A) étant associées à des données médicales réduites (DR_A) ; et
- des informations complémentaires comportant un montant (MP) de ladite prestation.

8. Système de gestion selon la revendication 7, **caractérisé en ce que**:
- la deuxième base de données (35) mémorise, en association avec ladite clef commune (IDC_A) générée pour un patient (A), des informations (DT A) représentatives des droits (D- LA) de ce patient (A) ; **en ce que**:
- le deuxième sous-système informatique (30) comporte:
- des moyens (31, 32, 33) pour calculer un montant de remboursement (MR) à partir des droits (DT_A) de ce patient (A), et du montant de la prestation (MP) reçu sous forme de données chiffrées (DC) en provenance du lecteur (20) d'un professionnel de santé adapté à lire le support numérique personnel (10) dudit patient (A) ; et
- des moyens (38) pour envoyer ledit montant de remboursement (MR) à destination dudit lecteur (20) ou du premier sous-système informatique (40).

9. Procédé de gestion de données personnelles sensibles (DD_A) mis en oeuvre par le deuxième sous-système informatique (30) d'un système de gestion selon l'une quelconque des revendications 1 à 8, comportant:
- une étape (E10) d'obtention d'une clef commune (IDC_A) générée par le premier sous-système informatique (40) dudit système de gestion à partir de données d'identification (ID_A) d'une personne (A), ledit premier sous-système informatique (40) comportant la base de données privée (45) qui associe ladite clef commune (IDC_A) auxdites données d'identification (ID_A) ;
- une étape (E12) de génération d'un nombre aléatoire (NA) à partir de ladite clef commune (IDC_A) ;
- une étape (E18) de réception d'un message d'enregistrement (M3) comportant au moins une donnée personnelle sensible (DD_A) de ladite personne (A) et ledit nombre aléatoire (NA) ; et
- une étape (E22) de mémorisation, dans la deuxième base de données (35) dudit deuxième sous-système informatique (30), de ladite donnée personnelle sensible (DD_A) en association avec ledit nombre aléatoire (NA) et de ladite clef commune (IDC_A).

10. Procédé de gestion selon la revendication 9, **caractérisé en ce qu'**il comporte:
- une étape (E24) d'obtention de données réduites (DR_A) à partir d'une donnée sensible (DD_A); et ;
- une étape (E26) d'envoi, à destination d'un premier sous-système informatique (40) d'un système de gestion selon l'une quelconque des revendications 1 à 8, d'un message (M6) comportant ladite donnée réduite (DR_A) et la clef commune (IDC_A) associée à ladite donnée sensible (DD_A) dans la deuxième base de données (35).

11. Procédé de gestion selon la revendication 9 ou 10 **caractérisé en ce qu'**il comporte en outre :
- une étape (E18) de réception de données chiffrées (DC), calculées à partir d'une donnée personnelle sensible (DD_A), d'un nombre aléatoire (NA) et d'une clef publique de chiffrement (KPUB_C) ;
- une étape (E20) de déchiffrement desdites données chiffrées (DC) avec une clef privée de chiffrement (KPRIV_C) associée à ladite clef publique (KPUB_C), pour obtenir ledit nombre aléatoire (NA) et ladite donnée personnelle (DD_A) en vue de leur mémorisation dans ladite deuxième base de données (35).

12. Procédé de gestion selon l'une quelconque des revendications 9 à 11, dans lequel lesdites données personnelles sensibles sont constituées par:
- des données médicales détaillées (DD_A) relatives à une prestation médicale effectuée pour un patient (A), ces données médicales détaillées (DD_A) étant associées à des données médicales réduites (DR A) ; et
- des données complémentaires comportant un montant (MP) de ladite prestation;
et dans lequel la deuxième base de données (35) mémorise (E14), en association avec ladite clef commune (IDC_A) générée pour un patient (A), des informations (DT_A) représentatives des droits (DT A) de ce patient (A), ce procédé étant **caractérisé en ce qu'**il comporte:
- une étape (E28) de calcul d'un montant de remboursement (MR) à partir des droits (DT_A) de ce patient (A), et du montant de la prestation (MP) reçu sous forme de données chiffrées (DC) en provenance d'un lecteur (20) d'un support numérique personnel (10) dudit patient (A) ; et
- une étape (E30) d'envoi dudit montant de remboursement (MR) à destination dudit lecteur (20), ou du premier sous-système informatique (40).

13. Procédé de gestion selon l'une quelconque des revendications 10 à 12, **caractérisé en ce qu'**il comporte:
- une étape (E32) de réception d'une requête d'authentification (RQ2), en provenance dudit premier sous-système informatique (40), ladite requête d'authentification (RQ2) comportant un identifiant (NF) de ladite donnée personnelle sensible particulière (DD_A1) et une clef commune (IDC A) générée pour une personne (A) ;
- une étape (E34) d'authentification de ladite personne (A) ; et
- une étape (E36) d'envoi de ladite donnée personnelle sensible particulière (DD_A1) audit premier sous-système informatique (40) en cas de succès de ladite authentification.

14. Programme d'ordinateur comprenant des instructions qui, lorsque le programme est exécuté par le deuxième sous-système informatique (30) d'un système de gestion de selon l'une quelconque des revendications 1 à 8, conduisent à celui-ci à mettre en oeuvre le procédé de gestion de données personnelles sensibles selon l'une quelconque des revendications 9 à 13.

15. Support d'informations lisible par le deuxième sous-système informatique (30) d'un système de gestion selon l'une quelconque des revendications 1 à 8 comprenant des instructions qui, lorsque le programme est exécuté par le deuxième sous-système informatique (30) conduisent à celui-ci à mettre en oeuvre le procédé de gestion de données personnelles sensibles selon l'une quelconque des revendications 9 à 13.

## Patentansprüche

1. System zur Verwaltung von vertraulichen persönlichen Daten (DD_A), umfassend:
- ein erstes Computersubsystem (40), umfassend:
- Mittel (41, 42, 43) zum Erzeugen eines gemeinsamen Schlüssels (IDC_A) aus Identifikationsdaten (ID_A) einer Person (A),
- eine private Datenbank (45), die den gemeinsamen Schlüssel (IDC_A) den Identifikationsdaten (ID_A) zuordnet, und
- ein zweites Computersubsystem (30), umfassend:
- Mittel (38) zum Erhalten des gemeinsamen Schlüssels (IDCA),
- Mittel zum Erzeugen einer Zufallszahl (NA) aus dem gemeinsamen Schlüssel (IDC_A);
- Mittel (38) zum Empfangen einer Registrierungsnachricht (M3), die mindestens ein vertrauliches persönliches Datum (DD_A) der Person (A) und die Zufallszahl (NA) aufweist, und
- Mittel (31, 32, 33) zum Speichern des vertraulichen persönlichen Datums (DD_A) in Verbindung mit der Zufallszahl (NA) und dem gemeinsamen Schlüssel (IDC_A) in einer zweiten Datenbank (35).

2. System zur Verwaltung nach Anspruch 1, **dadurch gekennzeichnet, dass** das zweite Computersubsystem (30) aufweist:
- Mittel (31, 32, 33) zum Erhalten mindestens eines reduzierten Datums (DR_A) von einem vertraulichen Datum (DD_A) und
- Mittel zum Senden einer Nachricht (M6) an das erste Computersubsystem (40), die das reduzierte Datum (DR_A) und den gemeinsamen Schlüssel (IDC_A) aufweist, die dem vertraulichen persönlichen Datum (DD_A) in der zweiten Datenbank (35) zugeordnet sind.

3. System zur Verwaltung nach Anspruch 1 oder 2, **dadurch gekennzeichnet, dass** das zweite Computersubsystem (30) Mittel (31, 32, 33) zur statistischen Aufbereitung der vertraulichen Daten (DD_A) aufweist, die in der zweiten Datenbank (35) gespeichert sind.

4. System zur Verwaltung nach einem der Ansprüche 1 bis 3, **dadurch gekennzeichnet, dass** das zweite Computersubsystem (30) Mittel zum Erzeugen eines Paares öffentlicher/privater Verschlüsselungsschlüssel (KPRIV_C, KPUB_C) aufweist,
System zur Verwaltung, wobei die Person (A) einen persönlichen digitalen Träger (10) verwendet, um verschlüsselte Daten (DC) aus dem vertraulichen persönlichen Datum (DD_A), der Zufallszahl (NA) und dem öffentlichen Verschlüsselungsschlüssel (KPUB_C) zu berechnen, wobei die verschlüsselten Daten (DC) geeignet sind, über ein Lesegerät (20) dieses Trägers (10) an das zweite Computersubsystem (30) gesendet zu werden,
- wobei das zweite Computersubsystem (30), aufweist:
- Mittel (38) zum Empfangen der verschlüsselten Daten (DC) von dem Lesegerät (20),
- Mittel (31, 32, 33) zum Entschlüsseln der verschlüsselten Daten (DC) mit dem privaten Verschlüsselungsschlüssel (KPRIV_C) und zum Erhalten der Zufallszahl (NA) und des persönlichen Datums (DD_A) zu ihrer Speicherung in der zweiten Datenbank (35).

5. System zur Verwaltung nach Anspruch 4, **dadurch gekennzeichnet, dass** der Träger (10) geeignet ist, um die vertraulichen Daten (DD_A) von dem Lesegerät (20) zu empfangen.

6. System zur Verwaltung nach einem der Ansprüche 1 bis 5, **dadurch gekennzeichnet, dass**:
- das erste Computersubsystem (40) aufweist:
- Mittel (48) zum Empfangen einer Anfrage (RQ1), um ein besonderes vertrauliches persönliches Datum (DD_A1) von einer Person (A) zu erhalten, und
- Mittel (48) zum Senden einer Anfrage (RQ2) zur Authentifizierung der Person (A) an das zweite Computersubsystem (30), wobei die Anfrage zur Authentifizierung (RQ2) eine Kennung (NF) des besonderen vertraulichen persönlichen Datums (DD_A1) und den gemeinsamen Schlüssel (IDC_A) aufweist, der aus den Identifikationsdaten (ID_A) der Person (A) erzeugt ist, und dadurch, dass
- das zweite Computersubsystem (30) aufweist:
- Mittel (38) zum Empfangen der Anfrage zur Authentifizierung (RQ2),
- Mittel (31, 32, 33) zur Authentifizierung der Person (A) und
- Mittel (38) zum Senden des besonderen vertraulichen persönlichen Datums (DD_A1) an das erste Computersubsystem (40) im Falle der erfolgreichen Authentifizierung.

7. System zur Verwaltung nach einem der Ansprüche 1 bis 6, wobei die vertraulichen persönlichen Daten bestehen aus:
- detaillierten medizinischen Daten (DD_A) in Bezug auf eine für einen Patienten (A) durchgeführte medizinische Leistung, wobei diese detaillierten medizinischen Daten (DD_A) mit reduzierten medizinischen Daten (DR_A) verbunden sind, und
- zusätzlichen Informationen, die einen Betrag (MP) der Leistung umfassen.

8. System zur Verwaltung nach Anspruch 7, **dadurch gekennzeichnet, dass**:
- die zweite Datenbank (35) in Verbindung mit dem gemeinsamen Schlüssel (IDC_A), der für einen Patienten (A) erzeugt wird, Informationen (DT_A) speichert , die für die Rechte (DT_A) dieses Patienten (A) repräsentativ sind, und dadurch, dass:
- das zweite Computersubsystem (30) aufweist:
- Mittel (31, 32, 33) zum Berechnen eines Rückerstattungsbetrags (MR) aus den Rechten (DT_A) dieses Patienten (A) und dem Betrag der Leistung (MP), der in Form von verschlüsselten Daten (DC) von dem Lesegerät (20) einer medizinischen Fachkraft empfangen wird, das geeignet ist, den persönlichen digitalen Träger (10) des Patienten (A) zu lesen, und
- Mittel (38) zum Senden des Rückerstattungsbetrags (MR) an das Lesegerät (20) oder das erste Computersubsystem (40).

9. Verfahren zur Verwaltung von vertraulichen persönlichen Daten (DD_A), das durch das zweite Computersubsystem (30) eines Systems zur Verwaltung nach einem der Ansprüche 1 bis 8 umgesetzt werden kann, umfassend:
- einen Schritt (E10) des Erhaltens eines gemeinsamen Schlüssels (IDC_A), der durch das erste Computersubsystem (40) des Systems zur Verwaltung aus Identifikationsdaten (ID_A) einer Person (A) erzeugt wird, wobei das erste Computersubsystem (40) die private Datenbank (45) aufweist, die den gemeinsamen Schlüssel (IDC_A) den Identifikationsdaten (ID_A) zuordnet,
- einen Schritt (E12) des Erzeugens einer Zufallszahl (NA) aus dem gemeinsamen Schlüssel (IDC_A),
- einen Schritt (E18) des Empfangens einer Registrierungsnachricht (M3), die mindestens ein vertrauliches persönliches Datum (DD_A) der Person (A) und die Zufallszahl (NA) aufweist, und
- einen Schritt (E22) des Speicherns des vertraulichen persönlichen Datums (DD_A) in Verbindung mit der Zufallszahl (NA) und dem gemeinsamen Schlüssel (IDC_A) in der zweiten Datenbank (35) des zweiten Computersubsystems (30).

10. Verfahren zur Verwaltung nach Anspruch 9, **dadurch gekennzeichnet, dass** es aufweist:
- einen Schritt (E24) des Erhaltens von reduzierten Daten (DR_A) von einem vertraulichen Datum (DD_A) und
- einen Schritt (E26) des Sendens einer Nachricht (M6) an ein erstes Computersubsystem (40) eines Systems zur Verwaltung nach einem der Ansprüche 1 bis 8, die das reduzierte Datum (DR_A) und den gemeinsamen Schlüssel (IDC_A) aufweist, der dem vertraulichen Datum (DD_A) in der zweiten Datenbank (35) zugeordnet ist.

11. Verfahren zur Verwaltung nach Anspruch 9 oder 10, **dadurch gekennzeichnet, dass** es ferner aufweist:
- einen Schritt (E18) des Empfangens von verschlüsselten Daten (DC), die aus einem vertraulichen persönlichen Datum (DD_A), einer Zufallszahl (NA) und einem öffentlichen Verschlüsselungsschlüssel (KPUB_C) berechnet werden,
- einen Schritt (E20) des Entschlüsselns der verschlüsselten Daten (DC) mit dem privaten Verschlüsselungsschlüssel (KPRIV_C), der mit dem öffentlichen Verschlüsselungsschlüssel (KPUB_C) verbunden ist, um die Zufallszahl (NA) und das persönliche Datum (DD_A) zu ihrer Speicherung in der zweiten Datenbank (35) zu erhalten.

12. Verfahren zur Verwaltung nach einem der Ansprüche 9 bis 11, wobei die vertraulichen persönlichen Daten bestehen aus:
- detaillierten medizinischen Daten (DD_A) in Bezug auf eine für einen Patienten (A) durchgeführte medizinische Leistung,
wobei diese detaillierten medizinischen Daten (DD_A) mit reduzierten medizinischen Daten (DR_A) verbunden sind, und
- zusätzlichen Informationen, die einen Betrag (MP) der Leistung umfassen, und wobei die zweite Datenbank (35) in Verbindung mit dem gemeinsamen Schlüssel (IDC_A), der für einen Patienten (A) erzeugt wird, Informationen (DT_A) speichert (E14), die für die Rechte (DT_A) dieses Patienten (A) repräsentativ sind, wobei dieses Verfahren **dadurch gekennzeichnet ist, dass** es aufweist:
- einen Schritt (E28) des Berechnens eines Rückerstattungsbetrags (MR) aus den Rechten (DT_A) dieses Patienten (A) und dem Betrag der Leistung (MP), der in Form von verschlüsselten Daten (DC) von einem Lesegerät (20) von einem persönlichen digitalen Träger (10) des Patienten (A) empfangen wird, und
- einen Schritt (E30) des Sendens des Rückerstattungsbetrags (MR) an das Lesegerät (20) oder das erste Computersubsystem (40).

13. Verfahren zur Verwaltung nach einem der Ansprüche 10 bis 12, **dadurch gekennzeichnet, dass** es aufweist:
- einen Schritt (E32) des Empfangens einer Anfrage zur Authentifizierung (RQ2) von dem zweiten Computersubsystem (40), wobei die Anfrage zur Authentifizierung (RQ2) eine Kennung (NF) des besonderen vertraulichen persönlichen Datums (DD_A1) und einen gemeinsamen Schlüssel (IDC_A) aufweist, der für eine Person (A) erzeugt wird,
- einen Schritt (E34) der Authentifizierung der Person (A) und
- einen Schritt (E36) des Sendens des besonderen vertraulichen persönlichen Datums (DD_A1) an das erste Computersubsystem (40) im Falle der erfolgreichen Authentifizierung.

14. Computerprogramm, umfassend Anweisungen, die, wenn das Programm von dem zweiten Computersubsystem (30) eines Systems zur Verwaltung nach einem der Ansprüche 1 bis 8 ausgeführt wird, dieses dazu bringen, das Verfahren zur Verwaltung von vertraulichen persönlichen Daten nach einem der Ansprüche 9 bis 13 umzusetzen.

15. Informationsträger, der von dem zweiten Computersubsystem (30) eines Systems zur Verwaltung nach einem der Ansprüche 1 bis 8 gelesen werden kann, umfassend Anweisungen, die, wenn das Programm von dem zweiten Computersubsystem (30) ausgeführt wird, dieses dazu bringen, das Verfahren zur Verwaltung von vertraulichen persönlichen Daten nach einem der Ansprüche 9 bis 13 umzusetzen.

## Claims

1. System for managing sensitive personal data (DD_A), including:
- a first computer subsystem (40) including:
- means (41, 42, 43) for generating a shared key (IDC_A) from identification data (ID_A) of an individual (A);
- a private database (45) that associates said shared key (IDC_A) with said identification data (ID_A); and
- a second computer subsystem (30) including:
- means (38) for acquiring said shared key (IDC_A);
- means for generating a random number (NA) from said shared key (IDC_A);
- means (38) for receiving a registration message (M3) including at least one sensitive personal item of data (DD_A) of said individual (A) and said random number (NA); and
- means (31, 32, 33) for storing said sensitive personal item of data (DD_A) in association with said random number (NA) and said shared key (IDC_A) in a second database (35).

2. Management system according to Claim 1, **characterized in that** the second computer subsystem (30) includes:
- means (31, 32, 33) for acquiring at least one reduced item of data (DR_A) from a sensitive item of data (DD_A); and
- means for sending, to said first computer subsystem (40), a message (M6) including said reduced item of data (DR_A) and the shared key (IDC_A) that are associated with said sensitive personal item of data (DD_A) in the second database (35).

3. Management system according to Claim 1 or 2, **characterized in that** the second computer subsystem (30) includes means (31, 32, 33) for the statistical processing of said sensitive data (DD_A) stored in the second database (35).

4. Management system according to any one of Claims 1 to 3, **characterized in that** the second computer subsystem (30) includes means for creating a private/public encryption key pair (KPRIV_C, KPUB_C);
in which management system said individual (A) uses a personal digital medium (10) to calculate encrypted data (DC) from said sensitive personal item of data (DD_A), said random number (NA) and said public encryption key (KPUB_C), said encrypted data (DC) being designed to be sent to said second computer subsystem (30) via a reader (20) of this medium (10);
- said second computer subsystem (30) including:
- means (38) for receiving said encrypted data (DC) from said reader (20);
- means (31, 32, 33) for decrypting said encrypted data (DC) with said private encryption key (KPRIV_C), and acquiring said random number (NA) and said item of personal data (DD_A) for the purpose of storing them in said second database (35).

5. Management system according to Claim 4, **characterized in that** said medium (10) is designed to acquire said sensitive data (DD_A) from said reader (20) .

6. Management system according to any one of Claims 1 to 5, **characterized in that**:
- said first computer subsystem (40) includes:
- means (48) for receiving a request (RQ1) to acquire a particular sensitive personal item of data DD_A1) of an individual (A); and
- means (48) for sending an authentication request (RQ2) for said individual (A) to the second computer subsystem (30), said authentication request (RQ2) including an identifier (NF) of said particular sensitive personal item of data DD_A1) and the shared key (IDC_A) generated from the identification data (ID_A) of said individual (A); and **in that**
- said second computer subsystem (30) includes:
- means (38) for receiving said authentication request (RQ2);
- means (31, 32, 33) for authenticating said individual (A); and
- means (38) for sending said particular sensitive personal item of data DD_A1) to said first computer subsystem (40) if said authentication is successful.

7. Management system according to any one of Claims 1 to 6, wherein said sensitive personal data consist of:
- detailed medical data (DD_A) relating to a medical service performed for a patient (A), these detailed medical data (DD_A) being associated with reduced medical data (DR_A); and
- additional information including a cost (MP) of said service.

8. Management system according to Claim 7, **characterized in that**:
- the second database (35) stores, in association with said shared key (IDC_A) generated for a patient (A), information (DT_A) representative of the rights (D- LA) of this patient (A); **in that**:
- the second computer subsystem (30) includes:
- means (31, 32, 33) for calculating a rebate amount (MR) on the basis of the rights (DT_A) of this patient (A), and from the cost of the service (MP) received in the form of encrypted data (DC) from the reader (20) of a healthcare professional designed to read the personal digital medium (10) of said patient (A); and
- means (38) for sending said rebate amount (MR) to said reader (20) or to the first computer subsystem (40).

9. Method for managing sensitive personal data (DD_A), implemented by the second computer subsystem (30) of a management system according to any one of Claims 1 to 8, including:
- a step (E10) of acquiring a shared key (IDC_A) generated by the first computer subsystem (40) of said management system from identification data (ID_A) of an individual (A), said first computer subsystem (40) including the private database (45) that associates said shared key (IDC_A) with said identification data (ID_A);
- a step (E12) of generating a random number (NA) from said shared key (IDC_A);
- a step (E18) of receiving a registration message (M3) including at least one sensitive personal item of data (DD_A) of said individual (A) and said random number (NA); and
- a step (E22) of storing said sensitive personal item of data (DD_A) in association with said random number (NA) and said shared key (IDC_A) in the second database (35) of said second computer subsystem (30).

10. Management method according to Claim 9, **characterized in that** it includes:
- a step (E24) of acquiring reduced data (DR_A) from a sensitive item of data (DD_A); and;
- a step (E26) of sending, to a first computer subsystem (40) of a management system according to any one of Claims 1 to 8, a message (M6) including said reduced item of data (DR_A) and the shared key (IDC_A) associated with said sensitive item of data (DD_A) in the second database (35).

11. Management method according to Claim 9 or 10, **characterized in that** it furthermore includes:
- a step (E18) of receiving encrypted data (DC), calculated from a sensitive personal item of data (DD_A), a random number (NA) and a public encryption key (KPUB_C);
- a step (E20) of decrypting said encrypted data (DC) with a private encryption key (KPRIV_C) associated with said public key (KPUB_C), in order to acquire said random number (NA) and said personal item of data (DD_A) for the purpose of storing them in said second database (35).

12. Management method according to any one of Claims 9 to 11, wherein said sensitive personal data consist of:
- detailed medical data (DD_A) relating to a medical service performed for a patient (A), these detailed medical data (DD_A) being associated with reduced medical data (DR_A); and
- additional data including a cost (MP) of said service;
and wherein the second database (35) stores (E14), in association with said shared key (IDC_A) generated for a patient (A), information (DT_A) representative of the rights (DT_A) of this patient (A), this method being **characterized in that** it includes:
- a step (E28) of calculating a rebate amount (MR) from the rights (DT_A) of this patient (A), and the cost of the service (MP) received in the form of encrypted data (DC) from a reader (20) of a personal digital medium (10) of said patient (A); and
- a step (E30) of sending said rebate amount (MR) to said reader (20) or to the first computer subsystem (40).

13. Management method according to any one of Claims 10 to 12, **characterized in that** it includes:
- a step (E32) of receiving an authentication request (RQ2), from said first computer subsystem (40), said authentication request (RQ2) including an identifier (NF) of said particular sensitive personal item of data DD_A1) and a shared key (IDC_A) generated for an individual (A);
- a step (E34) of authenticating said individual (A); and
- a step (E36) of sending said particular sensitive personal item of data DD_A1) to said first computer subsystem (40) if said authentication is successful.

14. Computer program comprising instructions that, when the program is executed by the second computer subsystem (30) of a management system according to any one of Claims 1 to 8, cause the latter to implement the method for managing sensitive personal data according to any one of Claims 9 to 13.

15. Information medium able to be read by the second computer subsystem (30) of a management system according to any one of Claims 1 to 8, comprising instructions that, when the program is executed by the second computer subsystem (30), cause the latter to implement the method for managing sensitive personal data according to any one of Claims 9 to 13.
